# EUROPEAN PATENT APPLICATION

(11) **EP 2 628 562 A1**
(43) Date of publication of application: **21.08.2013**
(21) Application number: 11832533.1
(22) Date of filing: 12.10.2011
(51) Int. Cl.: B23K 26/06, B23K 26/073, B23K 26/08

(54) **LASER PROCESSING DEVICE AND LASER PROCESSING METHOD**

(30) Priority: 15.10.2010 JP 2010232674
(71) Applicant: Mitsubishi Heavy Industries, Ltd., Tokyo 108-8215 (JP)
(72) Inventor: WATANABE, Masao, Tokyo 108-8215 (JP)
(74) Representative: HOFFMANN EITLE
(86) International application number: PCT/JP2011/073361
(87) International publication number: WO 2012/050098

(57) **Abstract**

An object is to realize a laser processing apparatus and a laser processing method with which a thick processed object can be cut using short-wavelength laser light. A laser processing apparatus (10) irradiates a processed object (12) with YAG-based laser light focused by a first irradiation unit (14) and radiates CO₂ laser light having a longer wavelength than the YAG-based laser light and focused by the second irradiation unit (16) onto a region of the processed object (12) being irradiated with the YAG-based laser light. In other words, the YAG-based laser light melts the metal forming the processed object (12), and the CO₂ laser light, having a higher plasma absorptance than the YAG-based laser light, increases the temperature of the molten metal. As a result, the molten metal reaches a high temperature, and the viscosity of the molten metal can be sufficiently reduced for the molten metal to be blown away by assist gas.

## Description

### {Technical Field}

The present invention relates to a laser processing apparatus and a laser processing method.

### {Background Art}

Recently, there has been progress in the development of laser cutting apparatuses, such as the one disclosed in Patent Literature 1, for instance, in which a laser beam is sent via an optical fiber from a laser oscillator to a processing head for cutting a metal plate workpiece, and the workpiece is cut with this laser beam. In this laser using an optical fiber (hereinafter referred to as "fiber laser"), solid-state laser light (for example, YAG-based laser light) is conveyed by using the optical fiber.
Fiber lasers have been becoming more widespread because the electrical energy required for generating laser light is small in comparison with gas lasers (for example, CO₂ lasers), the laser beam quality (the focusing characteristics and directivity of the laser beam) is high in comparison with rod-type solid state lasers, and it is possible to achieve high output power.

In cutting metal forming the processed object, some laser processing apparatuses perform cutting by heating the processed object to a high temperature using not only the power of the laser beam but also oxidation heat, produced when the metal is oxidized by oxygen gas (assist gas) that is blown while the processed object is irradiated with the laser beam. By heating the processed object to a high temperature, the metal forming the processed object and oxidized metal produced in the process of generating the oxidation heat are melted, forming molten metal. Then, the molten metal is removed from the processed object by being blown away by the pressure of the above assist gas so as to flow away, and thereby the processed object is cut.
The higher the temperature of the molten metal becomes, the more the viscosity decreases and the greater the fluidity; in the laser processing apparatus, therefore, it is necessary to reduce the viscosity of the molten metal by increasing the cutting temperature of the processed object and to improve the ease of removal of the molten metal by means of the assist gas.

Therefore, when cutting with a laser beam, it is necessary to increase the temperature of the interior of the processed object, in other words, the cutting temperature, to a high temperature. For example, in the case where the processed object to be cut is Fe (iron), the cutting temperature needs to be approximately 1200 °C to 1700 °C.

### {Citation List}

### {Patent Literature}

{PTL 1}
   Japanese Unexamined Patent Application, Publication No. 2008-296266

### {Summary of Invention}

### {Technical Problem}

However, with YAG-based lasers that are used in fiber lasers etc., it has been pointed out that it is difficult to increase the temperature during cutting as compared with CO₂ lasers that have been conventionally used.

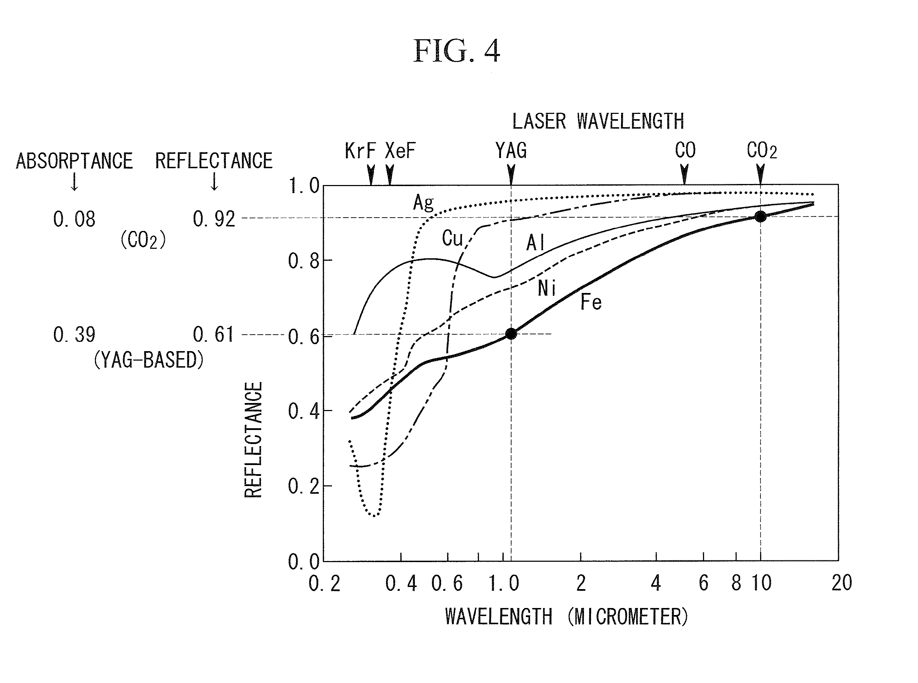

The reasons for this are thought to be as follows.
With YAG-based lasers and CO₂ laser, due to the different wavelength magnitudes, namely, the YAG-based laser wavelength of 1.06 to 1.08 µm and the CO₂ laser wavelength of 10.6 µm, the absorptance of the laser light in the material (hereinafter referred to as "material absorptance") and the absorptance of the laser light in the plasma (hereinafter referred to as "plasma absorptance") are different. For instance, as shown in the example in Fig. 4, which is a known example from the related art, the material absorptance in iron is 0.08 for CO₂ laser light and 0.39 for YAG-based laser light, which has a shorter wavelength than CO₂ laser light.

Thus, because the YAG-based laser light has higher material absorptance than the CO₂ laser light, more laser beam power is consumed for melting the processed object as compared with the CO₂ laser light. Hence, it is less likely that the laser beam power contributes to raising the temperature of the processed object. Furthermore, when cutting the processed object, some of the metal forming the processed object is vaporized, forming a plasma. Then, although the plasma temperature contributes to raising the temperature in the interior of the processed object to be cut, the plasma absorptance of the YAG-based laser light is about one-hundredth that of the CO₂ laser light. With the YAG-based laser light, therefore, it is difficult to increase the plasma temperature in the interior of the processed object to be cut.

In addition, when using a fiber laser, the refractive index changes due to stresses occurring at the interface between the cladding and the core resulting from differences among individual laser oscillators, degradation of the fiber over time, the accumulation and localization of mechanical stress (stress) in the fiber, and so forth, and this causes a deterioration in the quality and a reduction in the output power of the laser beam, which reduces the cutting performance of the laser processing apparatus.

As a result, with a laser processing apparatus using a laser beam having a wavelength shorter than that of CO₂ laser light, there is a problem that, when cutting a thick processed object, it is not possible to increase the temperature of the interior of the processed object to the temperature required for cutting, making it impossible to cut the processed object in some cases.

The present invention has been conceived in light of these circumstances, and an object thereof is to provide a laser processing apparatus and a laser processing method that can cut a thick processed object using short-wavelength laser light.

### {Solution to Problem}

To solve the problems described above, the laser processing apparatus of the present invention employs the following solutions.
Specifically, a laser processing apparatus according to a first aspect of the present invention includes a first irradiating unit for focusing a first laser beam and irradiating a processed object; and a second irradiating unit for focusing a second laser beam having a longer wavelength than the first laser beam and irradiating the processed object, wherein a region of the processed object being irradiated with the first laser beam focused by the first irradiating unit is irradiated with the second laser beam focused by the second irradiating unit.

With the first aspect of the present invention, the first laser beam is focused by the first irradiating unit and radiated onto the processed object, and the second laser beam having a longer wavelength than the first laser beam is focused by the second irradiating unit and radiated onto the processed object. Thus, the region of the processed object being irradiated with the first laser beam is irradiated with the second laser beam.

For each type of laser light, the shorter the laser wavelength becomes, the more the material absorptance increases and the plasma absorptance decreases; therefore, when cutting a processed object with short-wavelength laser light (for example, YAG-based laser light), it has been impossible to achieve a high enough temperature in the interior of the processing object such that the molten metal has a sufficiently low viscosity to be blown off by means of an assist gas.
Thus, in the first aspect of the present invention, the region of the processed object being irradiated with the first laser beam is irradiated with the second laser beam having a longer wavelength than the first laser beam. In other words, the first laser beam melts the metal forming the processed object, and the second laser beam, having a higher plasma absorptance than the first laser beam, raises the temperature of the molten metal. As a result, the molten metal reaches a high temperature, and the viscosity of the molten metal can be sufficiently decreased for the molten metal to be blown away by the assist gas; therefore, with the first aspect of the present invention, it is possible to cut a thick processed object using short-wavelength laser light.

Furthermore, to solve the problems described above, a laser processing apparatus according to a second aspect of the present invention employs the following solutions.
Specifically, a laser processing apparatus according to a second aspect of the present invention includes a first emitting unit for emitting a first laser beam for processing a processed object; a second emitting unit for emitting a second laser beam for processing the processed object and having a longer wavelength than the first laser beam; and a focusing unit for focusing the first laser beam and the second laser beam so that the second laser beam emitted from the second emitting unit irradiates a region of the processed object being processed by the first laser beam emitted from the first emitting unit.

With the second aspect of the present invention, the first laser beam for processing the processed object is emitted by the first emitting unit, and the second laser beam for processing the processed object and having a longer wavelength than the first laser beam is emitted by the second emitting unit. Then, the first laser beam and the second laser beam are focused by the focusing unit so that the region of the processed object being processed by the first laser beam emitted from the first emitting unit is irradiated with the second laser beam emitted from the second emitting unit.
With the second aspect of the present invention, the region of the processed object being irradiated with the first laser beam is irradiated with the second laser beam having a longer wavelength than the first laser beam. In other words, the first laser beam melts the metal forming the processed object, and the second laser beam, having a higher plasma absorptance than the first laser beam, raises the temperature of the molten metal. As a result, the molten metal reaches a high temperature, and the viscosity of the molten metal can be sufficiently decreased for the molten metal to be blown away by the assist gas. Thus, because the second aspect of the present invention has the focusing unit that is shared by the first laser beam and the second laser beam, making it possible to irradiate the above-described region with the first laser beam and the second laser beam via the focusing unit, it is possible, with a simple construction, to cut a thick processed object by using short-wavelength laser light.

In the laser processing apparatus according to the second aspect of the present invention, the focusing unit may be a focusing lens that focuses the first laser beam and the second laser beam onto the processed object, and the first laser beam and the second laser beam may be incident at positions equidistant from a center axis of the focusing lens.
With the second aspect of the present invention, by making the first laser beam and the second laser beam incident at positions equidistant from the center axis of the focusing lens, it is possible to irradiate the same region of the processed object with the first laser beam and the second laser beam; therefore, it is possible to cut a thick processed object in a simple manner by using short-wavelength laser light.

In the laser processing apparatus according to the first aspect or second aspect of the present invention, the first laser beam may be YAG-based laser light, and the second laser beam may be CO₂ laser light.
With the above-described configuration, because the first laser beam is YAG-based laser light and the second laser beam is CO₂ laser light, it is possible to cut a thick processed object in a simple manner using short-wavelength laser light.

In any of the above-described laser processing apparatuses, the first laser beam may be fiber laser light.
With the above described configuration, because the fiber laser light is high-quality, high-output-power laser light, a thick processed object can be cut more reliably.

In any of the above-described laser processing apparatuses, the first laser beam may be disk laser light.
With the above-described configuration, because the disk laser light is high-quality, high-output-power laser light, a thick processed object can be cut more reliably.

On the other hand, to solve the problems described above, a laser processing method according to a third aspect of the present invention employs the following solutions.
Specifically, a laser processing method according to a third aspect of the present invention is a laser processing method for a laser processing apparatus equipped with a first irradiating unit for focusing a first laser beam and irradiating a processed object, and a second irradiating unit for focusing a second laser beam having a longer wavelength than the first laser beam and irradiating the processed object, wherein a region of the processed object being irradiated with the first laser beam focused by the first irradiating unit is irradiated with the second laser beam focused by the second irradiating unit.

With the third aspect of the present invention, the region of the processed object being irradiated with the first laser beam is irradiated with the second laser beam having a longer wavelength than the first laser beam. In other words, the first laser beam melts the metal forming the processed object, and the second laser beam, having a higher plasma absorptance than the first laser beam, raises the temperature of the molten metal. As a result, the molten metal reaches a high temperature, and the viscosity of the molten metal can be sufficiently decreased for the molten metal to be blown away with the assist gas; therefore, the present invention can cut a thick processed object by using short-wavelength laser light.

### {Advantageous Effects of Invention}

The present invention provides the excellent advantage that it enables cutting of a thick processed object by using short-wavelength laser light.

### {Brief Description of Drawings}

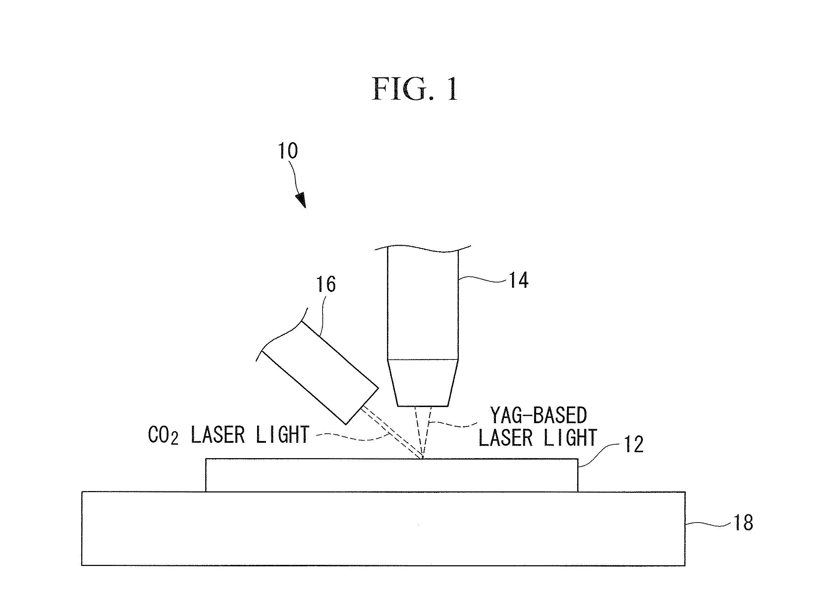

{Fig. 1}
   Fig. 1 is a schematic diagram showing the configuration of a laser processing apparatus according to a first embodiment of the present invention.
{Fig. 2}
   Fig. 2 is a schematic diagram showing cutting of a processed object with the laser processing apparatus according to the first embodiment of the present invention.
{Fig. 3}
   Fig. 3 is a schematic diagram showing the configuration of a laser processing apparatus according to a second embodiment of the present invention.
{Fig. 4}
   Fig. 4 is a graph showing the change in material absorptance versus laser wavelength.

### {Description of Embodiments}

Embodiments of a laser processing apparatus and a laser processing method according to the present invention will be described below with reference to the drawings.

### First Embodiment

A first embodiment of the present invention will be described below.
Fig. 1 shows the configuration of a laser processing apparatus 10 according to the first embodiment of the present invention. In the following, a description shall be given assuming that the laser processing apparatus 10 is a laser cutting apparatus for cutting a processed object 12.

The laser processing apparatus 10 includes a first irradiation unit 14 that focuses a first laser beam and irradiates the processed object 12 and a second irradiation unit 16 that irradiates the processed object 12 with a second laser beam having a longer wavelength than the first laser beam.
In the laser processing apparatus 10 according to this first embodiment, YAG-based laser light is used as an example of the first laser beam, and CO₂ laser light having a longer wavelength than the YAG-based laser light is used as an example of the second laser beam. Also, the first irradiation unit 14 according to this first embodiment employs a fiber laser in which an optical fiber is used as a medium.

The laser processing apparatus 10 according to this first embodiment cuts the processed object 12 by continuously irradiating the processed object 12, which is placed on a table 18, with the YAG-based laser light and the CO₂ laser light. The processed object 12 is metal, and in this first embodiment, the processed object 12 is assumed to be iron (Fe), as an example. Moreover, the thickness of the processed object 12 is, for example, ten to several tens of mm (for example, 50 mm). During cutting of the processed object 12, the laser processing apparatus 10 according to this first embodiment performs cutting while blowing the cut portion with oxygen gas, which is the assist gas.

The first irradiation unit 14 and the second irradiation unit 16 are supported by a three-axis arm (not illustrated) that can move in three axial directions (xyz axes), and the direction in which cutting of the processed object 12 advances is changed by driving the three-axis arm.

With a conventional laser processing apparatus using only YAG-based laser light, if the thickness of the processed object 12 is large (for example, ten to several tens of mm (for example, 50 mm)), it may not be possible to cut such a processed object 12.

One possible reason for this is that YAG-based laser light shows higher material absorptance compared with CO₂ laser light and lower plasma absorptance.
To give a more specific explanation, because YAG-based laser light shows higher material absorptance compared with CO₂ laser light, more laser beam power is consumed for melting the processed object 12, and it is less likely that the laser beam power contributes to raising the temperature of the processed object 12. Furthermore, when the processed object 12 is cut, some of the metal forming the processed object 12 is vaporized, creating a plasma. Then, although the plasma temperature contributes to raising the temperature of the interior of the processed object 12 being cut, the plasma absorptance of the YAG-based laser light is lower than that of the CO₂ laser light, and it is difficult for the YAG-based laser light to raise the plasma temperature in the interior of the processed object 12 being cut.

As a result of this, the metal forming the processed object 12 and the oxidized metal melt, forming molten metal, and even though a molten pool is formed in the interior of the processed object 12, because the laser beam cannot sufficiently raise the temperature of the molten pool, the viscosity of the molten metal does not decrease, and the assist gas cannot make the molten metal flow out from the interior of the processed object 12. Accordingly, with the conventional laser processing apparatus, in some cases it is not possible to cut a thick processed object 12 in which a molten pool is created in the interior.

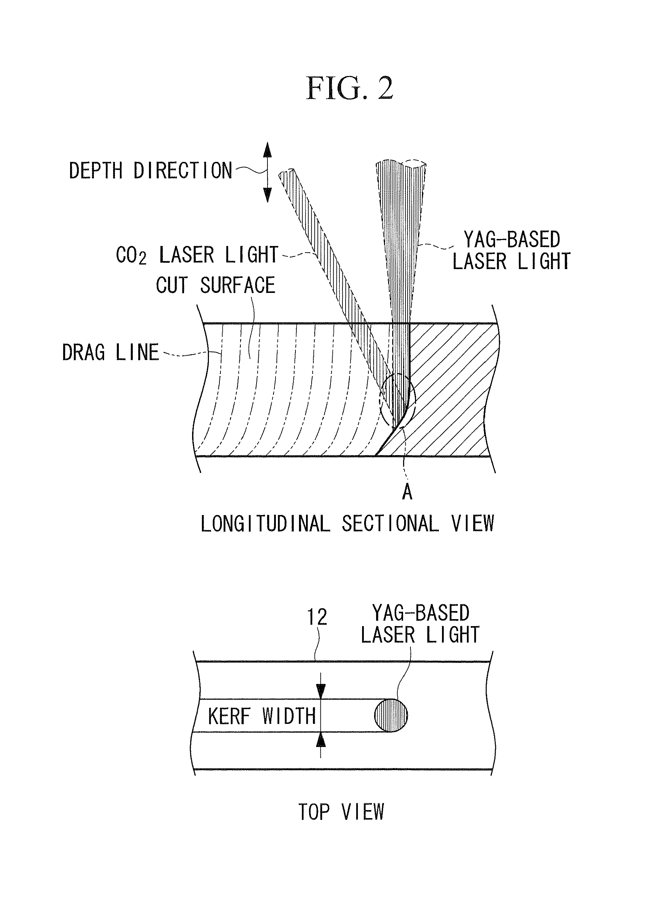

On the other hand, the laser processing apparatus 10 according to this first embodiment radiates CO₂ laser light focused by the second irradiation unit 16 onto a region A of the processed object 12, which is being irradiated with YAG-based laser light focused by the first irradiation unit 14, as shown in the longitudinal sectional view in Fig. 2.
By doing so, the YAG-based laser light, showing high material absorptance, melts the metal forming the processed object 12, and the CO₂ laser light, showing higher plasma absorptance than the YAG-based laser light, raises the temperature of the molten metal. In other words, by irradiating the region A of the processed object 12 with YAG-based laser light as well as CO₂ laser light showing higher plasma absorptance than YAG-based laser light, the CO₂ laser light is used as plasma-induction laser light, raising the plasma temperature.

In the laser processing apparatus 10, by using the CO₂ laser light as plasma-induction laser light in this way, plasma is induced from the molten metal, and it is possible to further increase the plasma generation level due to electrons coming from the induced plasma. The output power of the CO₂ laser light used in this first embodiment is, for example, several W to several tens of W.

As a result, heating of the molten metal proceeds, the viscosity of the molten metal is decreased, and the assist gas can blow away the molten metal from the processed object 12 with the pressure thereof; therefore, the laser processing apparatus 10 can cut the thick processed object 12.

The CO₂ laser light is made incident at an angle with respect to the processed object 12, as shown in the longitudinal sectional view in Fig. 2, thereby irradiating the region A. Therefore, as shown in the top view in Fig. 2, the diameter of the CO₂ laser light is preferably the same as or shorter than the diameter of the YAG-based laser light, so that the width of the YAG-based laser light diameter corresponds to the kerf width (cutting width).

Also, in cutting the processed object 12, cutting advances while the position of the region A changes in the depth direction of the processed object 12. Therefore, it is preferable to scan the CO₂ laser light in the depth direction so that the irradiation position of the CO₂ laser light changes in response to movement of the region A in the depth direction.
More specifically, the CO₂ laser light may be scanned in the depth direction by, for example, oscillating the second irradiation unit 16 itself, or the scanning CO₂ laser light may be scanned in the depth direction by providing the second irradiation unit 16 with a polygon mirror lens and rotating this polygon mirror lens.

As described above, the laser processing apparatus 10 according to this first embodiment irradiates the processed object 12 with YAG-based laser light focused by the first irradiation unit 14 and irradiates the region A of the processed object 12, which is being irradiated with the YAG-based laser light, with CO₂ laser light having a longer wavelength than the YAG-based laser light, focused by the second irradiation unit 16; therefore, it is possible to cut the thick processed object 12 by using short-wavelength laser light.

### Second Embodiment

A second embodiment of the present invention will be described below.

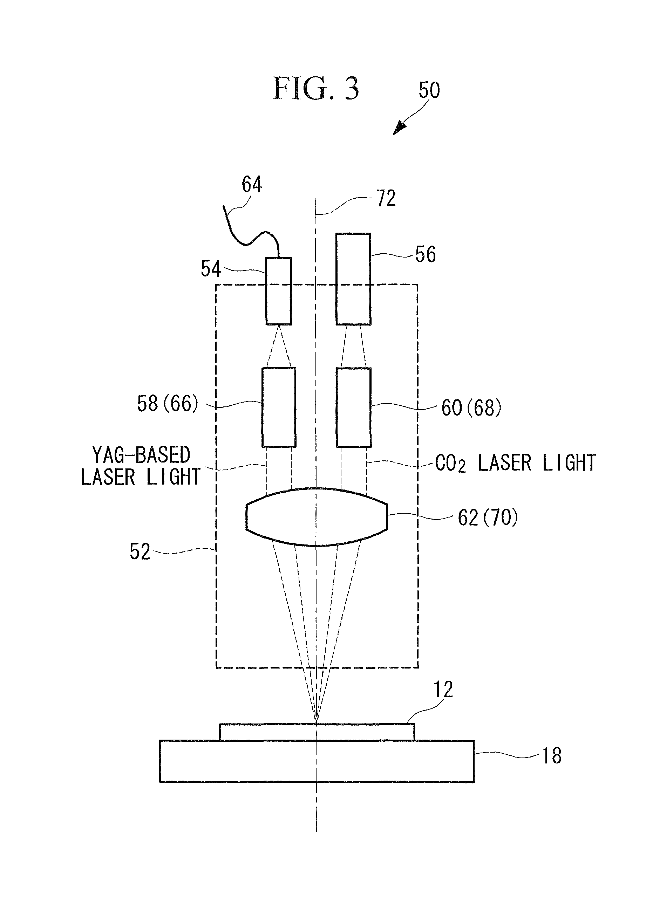

Fig. 3 shows the configuration of a laser processing apparatus 50 according to this second embodiment. In Fig. 3, constituent parts that are the same as those in Fig. 1 are assigned the same reference signs as in Fig. 1, and a description thereof will be omitted.

The laser processing apparatus 50 includes, at the top of the housing 52, a first laser-light emitting unit 54 that emits YAG-based laser light serving as a first laser beam and a second laser-light emitting unit 56 that emits CO₂ laser light serving as a second laser beam. A housing 52 includes a first collimating optical system 58, a second collimating optical system 60, and a focusing optical system 62. In addition, the housing 52 is supported by a three-axis arm (not illustrated) that can move in three axial directions (xyz directions), and the direction in which cutting of the processed object 12 advances is changed by driving the three-axis arm.

YAG-based laser light coming from the first laser-light emitting unit 54, which is generated by a laser oscillator (not illustrated), is emitted as fiber laser light, which is conveyed to the first laser-light emitting portion 54 by an optical fiber 64.

The first collimating optical system 58, which includes a collimating lens 66, converts the YAG-based laser light, which has a predetermined width (numerical aperture NA = sin θ) when emitted from the first laser-light emitting unit 54, into a collimated beam.

The second collimating optical system 60, which includes a collimating lens 68, converts the CO₂ laser light, which has a predetermined width (numerical aperture NA = sin θ) when emitted from the second laser-light emitting unit 56, into a collimated beam.

The focusing optical system 62, which includes a focusing lens 70, focuses the YAG-based laser light converted to a collimated beam by the first collimating optical system 58 and the CO₂ laser light converted to a collimated beam by the second collimating optical system 60 and irradiates the region A on the processed object 12 with the YAG-based laser light and the CO₂ laser light.
More specifically, the YAG-based laser light and the CO₂ laser light are incident at positions equidistant from a center axis 72 of the focusing lens 70 (in this second embodiment, left and right symmetric positions centered on the center axis 72). Thus, the focal points of the YAG-based laser light and the CO₂ laser light focused by the focusing lens 70 meet at the same position. In other words, the region A on the processed object 12 can be irradiated with the YAG-based laser light and the CO₂ laser light simultaneously via the focusing lens 70. Thus, because the laser processing apparatus 50 has the focusing lens 70 which is shared by the YAG-based laser light and the CO₂ laser light, making it possible to irradiate the region A with the YAG-based laser light and the CO₂ laser light via the focusing lens 70, it is possible, with a simple construction, to cut the thick processed object 12 with short-wavelength laser light.

The first collimating optical system 58, the second collimating optical system 60, and the focusing optical system 62 are formed, for example, of fused quartz glass. Also, the first collimating optical system 58, the second collimating optical system 60, and the focusing optical system 62 may each be formed of single lenses, or they may be formed of a plurality of lenses.

Although the present invention has been described above using the above-described embodiments, the technical scope of the present invention is not limited to the scope described in the above embodiments. Various modifications or improvements may be made to the above embodiments so long as they do not depart from the sprit of the invention, and forms in which such modifications or improvements have been made are also encompassed in the technical scope of the present invention.

For example, in the embodiments described above, although a description has been given of a case where the laser processing apparatuses 10 and 50 are used as a laser cutting apparatus that cuts the processed object 12, the present invention is not limited thereto; forms in which the laser processing apparatuses 10 and 50 are used as laser welding apparatuses that weld a plurality of processed objects are also permissible.

In the above embodiments, although a description has been given of a case where oxygen gas is used as the assist gas, the present invention is not limited thereto; forms in which another gas is used as the assist gas, such as nitrogen gas, argon gas, or the like, are also permissible.

In the above embodiments, although a description has been given of a case where YAG-based laser light is used as the first laser beam in the laser processing apparatuses 10 and 50, the present invention is not limited thereto; forms in which other laser light is used, so long as it is laser light having a shorter wavelength than the second laser beam, are also permissible. Moreover, in the above embodiments, although a description has been given of a case where CO₂ laser light is used as the second laser beam in the laser processing apparatuses 10 and 50, the present invention is not limited thereto; forms in which other laser light is used, so long as it is laser light having a longer wavelength than the first laser beam, are also permissible.

In the above embodiments, although a description has been given of a case where the fiber laser light is used as the first laser beam in the laser processing apparatuses 10 and 50, the present invention is not limited thereto; a form in which disk laser light (wavelength 1.05 to 1.09 µm) is used is also permissible.

In the above embodiments, although a description has been given of a case where the advancing direction of cutting of the processed object 12 is changed by means of the three-axis arm, the present invention is not limited thereto; a form supported by a two-axis arm that moves longitudinally (x) and laterally (y) is also permissible. Moreover, instead of using the three-axis arm, a form in which the advancing direction of cutting of the processed object 12 is changed by making the table 18 on which the processed object 12 is mounted movable in three axial directions and then moving the table 18 is also permissible.

### {Reference Signs List}

- 10: laser processing apparatus
- 12: processed object
- 14: first irradiation unit
- 16: second irradiation unit
- 54: first beam-emitting unit
- 56: second beam-emitting unit
- 70: focusing lens

## Claims

1. A laser processing apparatus comprising:
a first irradiating unit for focusing a first laser beam and irradiating a processed object; and
a second irradiating unit for focusing a second laser beam having a longer wavelength than the first laser beam and irradiating the processed object,
wherein a region of the processed object being irradiated with the first laser beam focused by the first irradiating unit is irradiated with the second laser beam focused by the second irradiating unit.

2. A laser processing apparatus comprising:
a first emitting unit for emitting a first laser beam for processing a processed object;
a second emitting unit for emitting a second laser beam for processing the processed object and having a longer wavelength than the first laser beam; and
a focusing unit for focusing the first laser beam and the second laser beam so that the second laser beam emitted from the second emitting unit irradiates a region of the processed object being processed by the first laser beam emitted from the first emitting unit.

3. The laser processing apparatus according to claim 2, wherein
the focusing unit is a focusing lens that focuses the first laser beam and the second laser beam onto the processed object, and
the first laser beam and the second laser beam are incident at positions equidistant from a center axis of the focusing lens.

4. The laser processing apparatus according to any one of claims 1 to 3, wherein
the first laser beam is YAG-based laser light, and
the second laser beam is CO₂ laser light.

5. The laser processing apparatus according to any one of claims 1 to 4, wherein the first laser beam is fiber laser light.

6. The laser processing apparatus according to any one of claims 1 to 4, wherein the first laser beam is disk laser light.

7. A laser processing method for a laser processing apparatus equipped with
a first irradiating unit for focusing a first laser beam and irradiating a processed object, and
a second irradiating unit for focusing a second laser beam having a longer wavelength than the first laser beam and irradiating the processed object,
wherein a region of the processed object being irradiated with the first laser beam focused by the first irradiating unit is irradiated with the second laser beam focused by the second irradiating unit.
